# EUROPEAN PATENT SPECIFICATION

(11) **EP 1 429 521 B1**
(45) Date of publication and mention of the grant of the patent: **03.05.2006**
(21) Application number: 03257526.8
(22) Date of filing: 28.11.2003
(51) Int. Cl.: H04L 29/08

(54) **Device management system for simplified device function control**
Managementsystem für ein Gerät zur vereinfachten Kontrolle der Gerätefunktion
Appareil d'un système de supervision pour un appareil de contrôle simplifiée

(30) Priority: 12.12.2002 JP 2002360878; 21.10.2003 JP 2003360579
(43) Date of publication of application: 16.06.2004
(73) Proprietor: SEIKO EPSON CORPORATION, Shinjuku-ku, Tokyo 163-0811 (JP)
(72) Inventor: Aoki, Mikio, Suwa-shi Nagano-ken 392-8502 (JP); Fukao, Akihito, Suwa-shi Nagano-ken 392-8502 (JP)
(74) Representative: Sturt, Clifford Mark

(56) References cited:
- WO-A-02/37217
- US-A- 5 951 639

## Description

### BACKGROUND OF THE INVENTION

### Field of the Invention

The present invention relates to a system for managing a network device, as well as a terminal and network device that are applied to the same, and more particularly, to a device management system, device management terminal and network device that allow one to change functions of a network device without requiring technical knowledge and can reduce time and effort required to change functions and also are suitable for shortening delivery times.

### Description of the Related Art

Conventional technologies for managing network devices such as network-enabled printers and scanners include a method for changing device functions.

The method connects a network device and a device management server so that they communicate with one another and displays functions or a destination on a display unit of the network device. When a user selects data or functions through an input unit, a processing program, printer driver, data format conversion program, mail transmission application and the like that are adapted to the user's utilization are downloaded and stored in the storage unit of the network device.

This allows functions to be changed without changing ROM in the network device.

With the conventional method, the user can select a program that can be applied to his/her network device from among a number of different programs managed by the device management server and can change the functions of the device only after the program is downloaded. To properly change a network device's functions thus requires technical knowledge about network devices as well as time and effort to perform operations such as selecting and downloading a program.

On the other hand, when designing a network device with its functions customized separately as required by a customer, the manufacturer has to go through four processes: analysis of the customer's requirement, consideration of the specification of the network device, hardware development, and software development. Depending on the design details, analysis of requirement may take one month, consideration of the specification one month, hardware development six months, and software development four months, for example. Thus, even if the development of hardware and software can be carried out in parallel, it would take as long as eight month after having received the customer's request to delivery of the product.

The invention has been made in consideration of such a technical problem unsolved by prior arts, and has an object of providing a device management system, device management terminal and network device that allow one to change functions of a network device without requiring technical knowledge and can reduce time and effort required for function change and are also suitable for shortening delivery times.

PCT patent application WO 02/37217, published on 10th May 2002, describes a home networking system, in which a number of network devices are connected to a first network, while a number of other network devices are connected to a second network. A gateway device links the two networks via an IP network, which in turn is linked to remote databases. The gateway device comprises a service management system, which contains a number of applications. These applications provide specific services for the network devices and include applications which provide synergistic functions utilizing the resources of each of a selected set of the network devices. The applications may be transferred from one or more of the network devices to the gateway device or via the IP network to the gateway device. The gateway device may also provide a GUI on a display device, enabling a user to select a particular device and associated application. In use, when a new network device is connected to the home network, the gateway device determines the ID of the network device and determines its current configuration and the history of its use, including any applications used in the past. If suitable applications for the device are not already present in the gateway device, these are downloaded via the IP network.

### SUMMARY OF THE INVENTION

In accordance with a first aspect of the present invention, there is provided a device management system as set forth in claim 1.

With such a constitution, in the network device, the user can select one or more of determined functions through the function selecting section. When the user selects a function(s), the module reading section reads out a function provision module corresponding to the function from the module storing section.

This provides an advantage that a user can change the functions of a network device even more easily since he/she may select ones he/she wants from functions available to the network device. It also provides an advantage that a function list can be generated and functions can be selected regardless of the state of the device management terminal and communication state of a network, as compared with a case where the function selecting section is provided in the device management terminal. For a function selected, a function provision module may be obtained from the device management terminal when the network device is connected to a network after that function is selected. In addition, it provides an advantage that network traffic and load on the device management terminal can be reduced since excessive accesses to the device management terminal can be mitigated.

Furthermore, the provision of the selection interface in the network device, through which one can select one or more of determined functions, provides an advantage that the user can select a function relatively easily because the user can sect the function through the selection interface.

The invention also provides in second and third aspects thereof, a device management terminal for use in the device management system as recited in claim 9 and a network device, likewise for use in the device management system, as recited in claim 10.

Embodiments of the invention are set out in the dependent claims.

### BRIEF DESCRIPTION OF THE DRAWINGS

FIG. 1 is a block diagram illustrating the configuration of a network system to which the invention is applied;
FIG. 2 is a block diagram showing the configuration of a device management server 100;
FIG. 3 shows the data structure of a management information registration DB 40;
FIG. 4 is a flowchart showing user registration;
FIG. 5 is a flowchart showing module provision;
FIG. 6 is a block diagram showing the configuration of a network device 200;
FIG. 7 is a flowchart showing user registration request processing;
FIG. 8 is a flowchart showing module acquisition;
FIG. 9 shows a GUI screen on which one can select from available functions;
FIG. 10 is a flowchart showing module acquisition; and
FIG. 11 shows a postcard on which one can select from available functions.

### DETAILED DESCRIPTION OF THE PREFERRED EMBODIMENTS

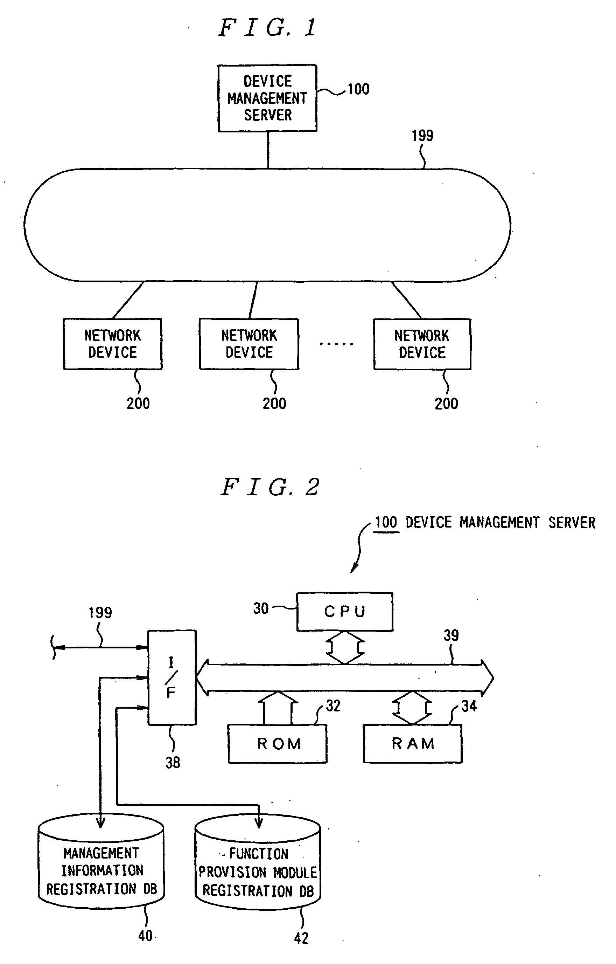

Embodiments of the invention will be described with reference to the drawings. FIGS. 1 to 9 illustrate embodiments of a device management system, device management terminal, network device, terminal program, device program, and device management method of the invention.

An embodiment of the invention is to apply the device management system, device management terminal, network device, terminal program, device program, and device management method of the invention to a case where the function of a network device 200 is extended when device 200 is connected to the Internet 199, as shown in FIG. 1. The configuration of the network system to which the invention is applied will be first described with reference to FIG. 1. FIG. 1 is a block diagram showing the configuration of the network system to which the invention is applied. As shown, apluralityofnetworkdevices 200 and a device management server 100 for managing the network devices 200 are connected to the Internet 199. The network devices 200 include network-enabled scanners and printers, for example.

The configuration of the device management server 100 will be next described in detail with reference to FIG. 2. FIG. 2 is a block diagram showing the configuration of the device management server 100.

As shown, the device management server 100 is comprised of a CPU 30 for controlling operations and the entire system based on a control program, ROM 32 having a control program and the like for the CPU 30 stored in a predetermined area in advance, RAM 34 for storing data read from the ROM 32 and the like and operation result necessary in operation process by the CPU 30, and an I/F 38 mediating input/output of data with external devices. They are interconnected through a bus 39, which is a signal line for transferring data, so that they can receive and send data with each other.

Connected to the I/F 38 are a management information registration database (hereinafter abbreviated as "DB") 40 with which user information regarding users and device information and other management information regarding the network devices 200 are registered, a functionprovisionmodule registration DB 42 with which function provision modules are registered that are applied to the network devices 200 to supply them with functions, and a signal line that is connected to the Internet 199.

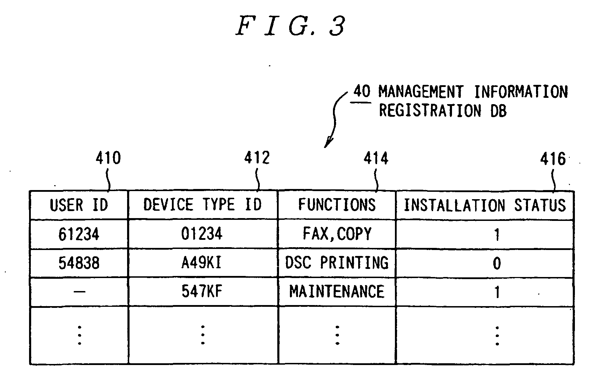

FIG. 3 shows the data structure of the management information registration DB 40.

As shown in the figure, in the management information registration DB 40, one record for each of the network devices 200 or for each user is stored. Each record includes a field 410 for registering a user ID that uniquely identifies a user, a field 412 for registering a device type ID that uniquely identifies the type of the user's network device 200, a field 414 for registering functions available to the network device 200, and a field 416 indicating the application status of a function provision module.

In the example of the FIG. 3, a user ID "61234", a device type ID "01234", available functions "FAX, copy", and application status "1" are registered in the first record. This means that a user identified by the user ID "61234", owns a network device 200 of a type identified by the device type ID "01234", and fax and copy functions are available to the network device 200, and a corresponding function provision module has been already applied.

In the function provision module registration DB 42, a plurality of function provision modules are registered. A function provision module is a program module that is applied to the network device 200 to provide it with a function, and that realizes a function that is provided in conjunction with other network devices 200. As an example of a function provision module, in a case the target network device 200 is a printer and a scanner exists as an available network device 200, there would be a program module that realizes copy or FAX function by causing the printer and scanner to work in combination.

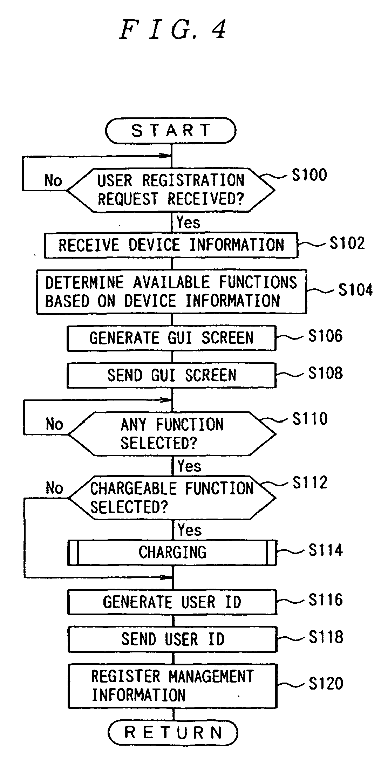

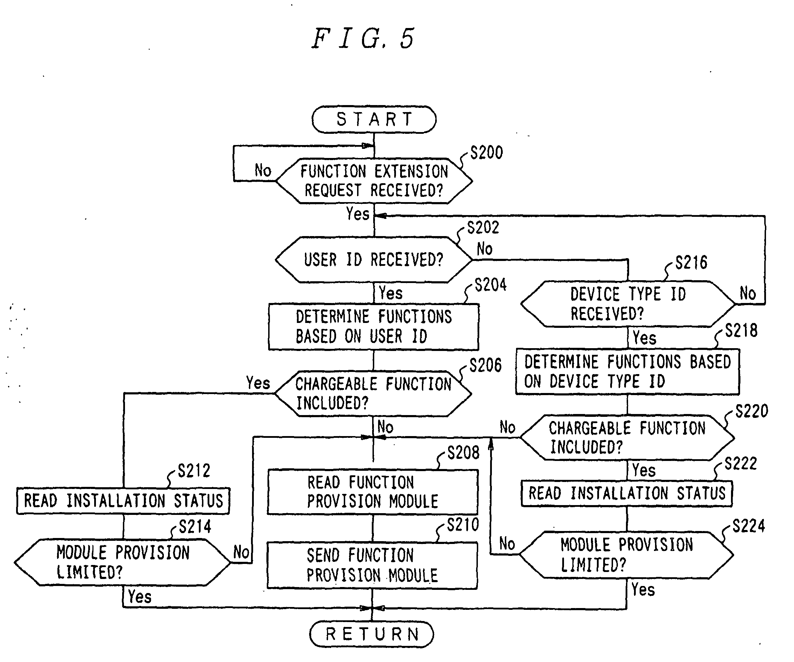

Returning to FIG. 2, the CPU 30 is comprised of a micro processing unit (MPU) and the like, invoking a predetermined program stored in a predetermined area of the ROM 32, and, in accordance with the program, executing user registration and module provision, which are shown as the flowcharts in FIGS. 4 and 5, using time division technique.

User registration will be first described in detail with reference to FIG. 4. FIG. 4 is a flowchart showing user registration.

User registration is processing of registering a user in response to a user registration request from the network device 200. Once initiated by the CPU 30, the process first proceeds to step S100, as shown in FIG. 4.

At step S100, it is determined whether or not a user registration request has been received. If it is determined that a user registration request has been received (Yes), the process proceeds to step S102, otherwise (No), the process waits at step S100 until a request is received.

At step S102, device information is received, and the process proceeds to step S104 to determine functions available to the requesting network device 200 based on the device type ID included in the device information. Specifically, at step S104, reference is made to a function registration table that stores functions associated with device type IDs, and functions for the received device type ID are determined.

Then at step S106, a GUI screen on which one can select from the determined functions is generated, and at step S108, GUI screen information for composing the generated GUI screen is sent to the requesting network device 200. The process then proceeds to step S110.

At step S110, input to the GUI screen is received and determination is made as to whether one or more of the functions are selected on the GUI screen based on the input. If it is determined that one or more of the functions have been selected (Yes), the process proceeds to step S112, otherwise (No), the process waits at step S110 until input to the GUI screen is received.

At step S112, it is determined whether the function selected on the screen is a function to be charged or not. If it is determined that the function is a chargeable function (Yes), the process proceeds to step S114 to have the user enter his/her personal information necessary for charging and perform charging processing of charging the utilization of the function, and then proceeds to step S116.

At step S116, a unique user ID is generated that does not overlap any user ID registered with the management information registration DB 40, and at step S118, the generated user ID is sent to the requesting network device 200. Then at step S120, the user ID, the function selected on the GUI screen, and the device type ID included in the device information received at step S102 are registered with the management information registration DB 40 as management information, and the processing is terminated and the system returns to operation it was originally performing.

Meanwhile, if it is determined at step S112 that the function selected on the GUI screen is not a chargeable function (No), the process proceeds to step S116.

Module provision will be now described in detail with reference to FIG. 5. FIG. 5 is a flowchart illustrating module provision.

The module provision is processing of providing a function provision module available to the network device 200 in response to a function extension request from the network device. Once initiated in the CPU 30, the process first proceeds to step S200 as shown in FIG. 5.

At step S200, determination is made as to whether or not a request for function extension has been received. If it is determined that a request for function extension has been received (Yes), the process proceeds to step S202, otherwise (No), the process waits at step S200 until a request is received.

At step S202, it is determined whether a user ID has been received or not. If it is determined that a user ID has been received (Yes), the process proceeds to step S204 to determined functions available to the requesting network device 200 based on the user ID. Specifically, at step S204, a record that stores the same user ID as the received one is searched for in the management information registration DB 40, and if the record is found, functions registered in the field 414 of the record are read out.

Then, at step S206, it is determined whether or not the determined function (s) include a chargeable function. If it is determined there is no chargeable function (No), the process proceeds to step S208 to read out a function provision module corresponding to the determined function from the function provision module registration DB 42. Then at step S210, the function provision module is sent to the requesting network device 200, and the processing is terminated and the system returns to operation it was originally performing.

Meanwhile, if it is determined at step S206 that the determined function(s) include a chargeable function (Yes), the process proceeds to step S212 to search for and read out a record that stores the same user ID as the received one from the management information registration DB 40 and proceeds to step S214.

At step 214, based on the registered content of the field 416 of the record, it is determined whether or not the function provision module corresponding to the chargeable function has been provided one or more times in past. If it is determined that the module has never been provided in past (No), the process proceeds to step S208, otherwise (Yes), the processing is terminated and the system returns to operation it was originally performing.

Meanwhile, if it is determined at step S202 that a user ID has not been received (No), the process proceeds to step S216 to determine whether or not a device type ID has been received. If it is determined that a device type ID has been received (Yes), the process proceeds to step S218.

At step S218, based on the device type ID, functions that are available to the requesting network device 200 are determined. Specifically, at step S218, a record that stores the same device type ID as the received one is searched for in the management information registration DB 40, and if the record is found, functions registered in the field 414 of the record are read out.

Then, at step S220, it is determined whether or not the determined function(s) include a chargeable function. If it is determined that they include no chargeable function (No), the process proceeds to step S208.

On the other hand, if it is determined at step S220 that the determined functions include a chargeable function (Yes), the process proceeds to step S222 to search for and read out a record that stores the same device type ID as the received one from the management information registration DB 40, and proceeds to step S224.

At step S224, based on stored content of the field 416 of the record, determination is made as to whether the function provision module corresponding to the chargeable function has been provided one or more times in past or not. If it is determined that the module has never been provided (No), the process proceeds to step S208, otherwise (Yes), the processing is terminated and the system returns to operation it was originally performing.

On the other hand, if it is determined at step S216 that no device type ID has been received (No), the process proceeds to step S202.

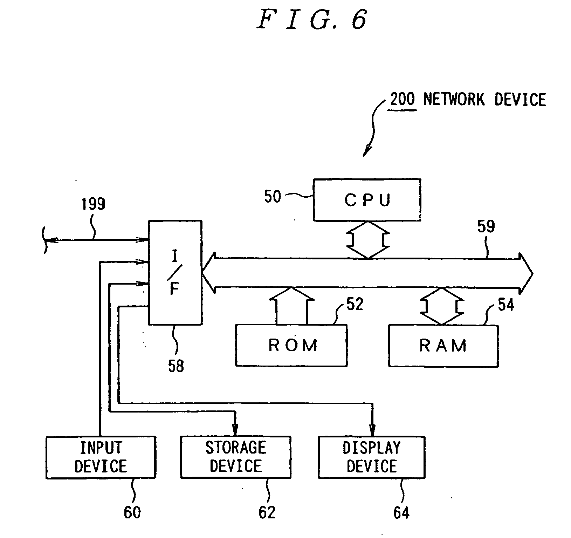

In the following, the configuration of the network device 200 will be described in detail with reference to FIG. 6. FIG. 6 is a block diagram showing the configuration of the network device 200.

As shown, the network device 200 is comprised of a CPU 50 for controlling operations and the entire system based on a control program, ROM 52 having a control program and the like for the CPU 50 stored in a predetermined area in advance, RAM 54 for storing data read from the ROM 52 and the like and operation result necessary in operation by the CPU 50, and an I/F 58 for mediating input/output of data with external devices. They are interconnected through a bus 59, which is a signal line for transferring data, so that they can receive/send data with one another.

Connected to the I/F 58 are an input device 60 that comprises a keyboard or a mouse as a human interface through which data can be entered, storage device 62 for storing data, tables and the like as files, a display device 64 for displaying a screen based on image signals, and a signal line that is connected to the Internet 199. In addition, although not shown, a printing device in a case the network device 200 is a printer, and an image reading device in a case the network device 200 is a scanner may be connected to the I/F 58, for example.

The storage device 62 has device information stored thereon. Device information includes a device type ID, a device ID that uniquely identifies the user's network device 200, and its performance, for example.

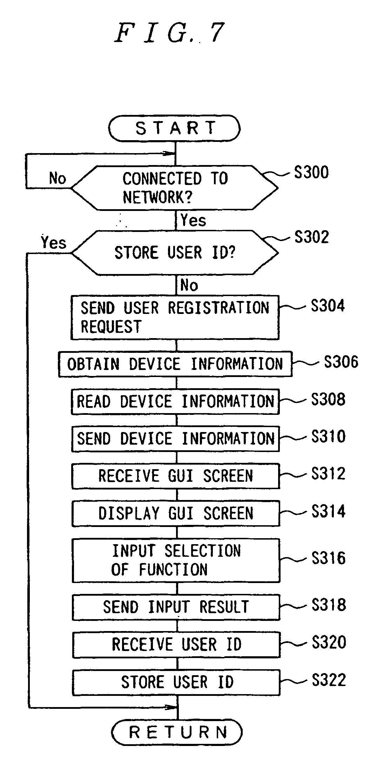

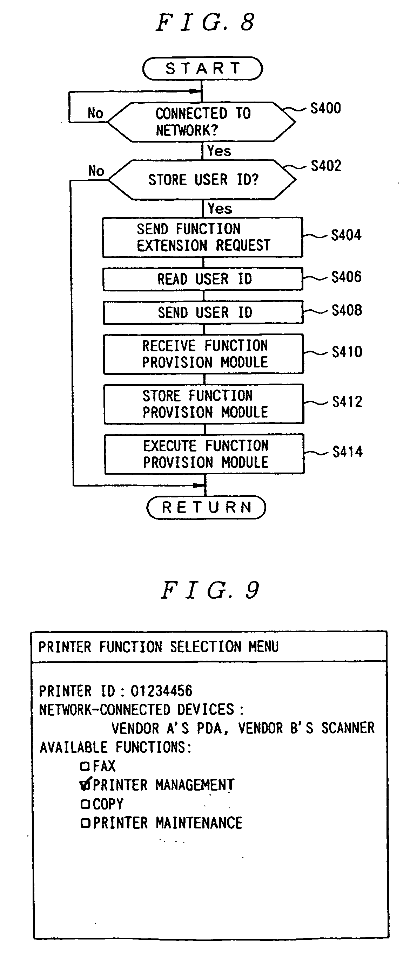

The CPU 50 is comprised of a micro processing unit (MPU) and the like, invoking a predetermined program stored in a predetermined area of the ROM 52, and in accordance with the program, executing the user registration and module acquisition shown in the flowcharts of FIGS. 7 and 8 using time division technique.

Processing of a user registration request will be first described in detail with reference to FIG. 7. FIG. 7 is a flowchart illustrating processing of a user registration request.

Processing of user registration request is processing that corresponds to the user registration shown in FIG. 4. Once initiated by the CPU 50, the process first proceeds to step S300 as shown in FIG. 7.

At step S300, determination is made as to whether the network device 200 is connected to the Internet 199 or not. If it is determined that the device is connected to the Internet 199 (Yes), the process proceeds.to step S302, otherwise (No), the process waits at step S300 until the device is connected to the Internet 199.

At step S302, it is determined as to whether or not a user ID is stored in the storage device 62. If it is determined that a user ID is not stored in the storage device 62 (No), the process proceeds to step S304 to send a user registration request to the device management server 100 and proceeds to step S306.

At step S306, device information is obtained from another network device 200 available, and then at step S308, device information is read out from the storage device 62. And at step S310, both pieces of the device information are sent to the device management server 100. The process then proceeds to step S312.

At step S312, GUI screen composition information is received, then at step S314, a GUI screen is displayed on the display device 64 based on the GUI screen composition information. Then at step S316, selection of the functions is input from among the functions displayed on the GUI screen and the process proceeds to step S318.

At step S318, input on the GUI screen is sent to the device management server 100, and at step S320, a user ID is received. At step S322, the received user ID is stored in the storage device 62, and the processing is terminated and the system returns to operation it was originally performing.

On the other hand, if it is determined at step S302 that a user ID is stored in the storage device 62 (Yes), the processing is terminated and the system returns to operation it was originally performing.

The module acquisition will be now described in detail with reference to FIG. 8. FIG. 8 is a flowchart illustrating module acquisition.

The module acquisition is processing that corresponds to the module provision shown in FIG. 5. Once initiated in the CPU 50, the process first proceeds to step S400 as shown in FIG. 8.

At step S400, it is determined whether or not the network device 200 is connected to the Internet 199. If it is determined that the device is connected to the Internet 199 (Yes), the process proceeds to step S402, otherwise (No), the process waits at step S400 until the device is connected to the Internet 199.

At step S402, it is determined whether or not a user ID is stored in the storage device 62. If it is determined that a user ID is stored in the storage device 62 (Yes), the process proceeds to step S402 to send a request for function extension to the device management server 100 and proceeds to step S406.

At step S406, the user ID is read from the storage device 62, and at step S408, the user ID is sent to the device management server 100. The process then proceeds to step S410.

At step S410, a function provision module is received, and then at step S412 the function provision module is stored in the storage device 62. At step S414, the function provision module is executed, and the processing is terminated and the system returns to operation it was originally performing.

Meanwhile, if it is determined at step S402 that a user ID is not stored in the storage device 62 (No), the processing is terminated and the system returns to operation it was originally performing.

In the following, the operation of the embodiment will be described.

When a printer as the network device 200 is connected to the Internet 199, a user registration request is sent to the device management server 100 through step S304 since the network device 200 does not store any user ID in the storage device 62 in its initial state. Then, through steps S306 to S310, device information is obtained from another network device 200 available, device information is read from the storage device 62, and both pieces of the device information are sent to the device management server 100.

When it receives the device information along with the user registration request, the device management server 100 determines functions available to the network device 200 based on the device type ID included in the device information, generates a GUI screen on which one can select from the determined functions, and sends GUI screen composition information for composing the GUI screen to the network device 200, through steps S104 to S108.

FIG. 9 illustrates a GUI screen on which one can select from available functions.

In the network device 200, upon receiving the GUI screen composition information, a GUI screen on which one can select from available functions is displayed on the display device 64 through step S314 based on the GUI screen composition information, as shown in FIG. 9. The user then selects one or more functions he/she needs from the functions on the GUI screen through the input device 60. In the example in FIG. 9, "FAX", "printer management", "copy", and "printer maintenance" are displayed as available functions, and the user has selected "printer management". Once selection of a function has been entered, the input on the GUI screen is sent to the device management server 100 through step S318.

On receiving the input on the GUI screen, the device management server 100 determines whether or not the function selected on the GUI screen is a chargeable function through step S112. If it is determined that the function is chargeable, charging processing is performed, and a user ID is generated and sent to the network device 200, through steps S114 to S118 . And through step S120, the generated user ID, the function selected on the GUI screen, and the device type ID included in the received device information are registered in the management information registration DB 40 as management information.

When it receives the user ID, the network device 200 stores it in the storage device 62 through step S322.

In addition, if the network device 200 is connected to the Internet 199 with a user ID stored in the storage device 62, the network device 200 sends a function extension request to the device management server 100, reads the user ID from the storage device 62, and sends it to the device management server 100, through steps S404 to S408.

When it receives the user ID along with the function extension request, the device management server 100 determines functions available to the network device 200 based on the user ID it received and determines whether or not those functions include a chargeable function through steps S204 and S206. If it is determined that no chargeable function is included, a function provision module corresponding to the determined function is selected from the function provision module registration DB 42, and the function provision module is sent to the network device 200 through steps S208 and S210.

On receiving the function provision module, the network device 200 stores the function provision module in the storage device 62 and executes the module to realize the function through steps S512 and S514.

On the other hand, if it is determined that the determined functions include a chargeable function, the device management server 100 searches for and reads out a record that stores the same user ID as the received one from the management information registration DB 40, and based on the registered content of the field 416 of the record, determines whether or not the function provision module corresponding to the chargeable function has been provided one or more times in past, through step S212 and S214. If it is determined that the module has never been provided, the function provision module corresponding to the determined function is read from the function provision module registration DB 42, and the module is sent to the network device 200, through steps S208 and S210.

Meanwhile, when the determined functions include a chargeable function, if it is determined that the function provision module corresponding to that function has been provided one or more times in past, the device management server 100 does not send the module.

In such a manner, in this embodiment, when device information is received, the device management server 100 determines function(s) available to the network device 200 based on the device information, retrieves a function provision module for the function from the function provision module registration DB 42, and sends the module to the network device 200. And the network device 200 sends device information in the storage device 62 to the device management server 100, and when it receives a function provision module, it will execute it.

In this way, a function provision module that realizes an available function is incorporated into the network device 200 just by connecting the network device 200 to the Internet 199. Thus, the functions of the network device 200 can be altered relatively easily with less technical knowledge than required by prior arts, and also incorporation of a function provision module is simplified, thereby resulting in relatively reduced time and effort required for changing functions.

Also, when network devices 200 whose functions are customized separately as required by customers are designed, hardware and software that realize generic functions are developed in advance, and network devices 200 which incorporates the hardware and software are produced in quantity. When a customer poses some requirement, the requirement is analyzed and specifications are considered. And if separate functions other than the generic functions are necessary, those functions are realized by software. That is, function provision modules that realize those functions may be prepared after the analysis of requirement and consideration of specifications.

It means that delivery times can be shortened as compared with conventional cases since hardware development and some of software development can be done before receiving customers' requirements.

Moreover, in the embodiment, a function provision module is a module that realizes a function that is provided in conjunction with another network device 200.

It allows a user to utilize with relative ease a function that is provided in conjunction with another network device 200, since much technical knowledge is not required of the user in utilizing such a function.

Moreover, in the embodiment, the network device 200 obtains device information from another available network device 200 and sends device information stored in the storage device 62 and the obtained device information to the device management server 100.

This allow a user to utilize a function that is provided with conjunction with another network device 200 with additional ease, since the user does not have to get information regarding another network device 200 in utilizing such a function.

Moreover, in the embodiment, the device management server 100 allows the user to select one or more of the functions it determined, and reads out a function provision module that corresponds to a function the user selected from the function provision module registration DB 42.

The user may thus select a function he/she wants from among functions available to the network device 200, so the user can change functions of the network device 200 even more easily. Also, since a list of selectable functions is provided based on data managed by the device management server 100, the user can select from the latest services (functions) relatively constantly. For service providers, collective management of information, security enhancement, and real-time management of service provision can be enabled. The result is that utilization management can be conducted relatively correctly such as when paid service is provided.

Further, in the embodiment, the device management server 100 generates a GUI screen on-which one can select one or more functions from functions it determined, and presents the screen to the user for selection of one or more functions.

This allows the user to select functions on the GUI screen, thus facilitating selection of the functions.

Further, in the embodiment, the device management server 100 determines functions available to the network device 200 based on a function registration table that stores functions associated with device type IDs.

This allows function provision modules to be managed for each type of the network device 200, thus relatively appropriate functions can be provided according to the type of the network device 200.

Moreover, in the embodiment, on receiving a user ID, the device management server 100 reads out a function provision module corresponding to the user ID from the function provision module registration DB 42 and sends the module to the network device 200. And the network device 200 sends the user ID stored in the storage device 62 to the device management server 100.

Insuchamanner, a function provision module that realizes an available function is incorporated into the network device 200 just by registering a common user ID both in the network device 200 and device management server 100. This can enable further easy modification of the functions of the network device 200 and simplifies the incorporation of a function provision module, thereby further reducing the time and effort required for function modification.

In the embodiment, the device management server 100 is designed not to provide a function provision module that has once been provided to a network device 200 based on a user ID when it receives an access that is based on the same user ID.

This feature can reduce the possibility that function provision modules are utilized improperly.

In the embodiment, the device management server 100 corresponds to the device management terminal of Invention 2, 4, 5, 12 to 18, 20 to 25, 27, 32, 43, 45, or 50, and the function provision module registration DB 42 corresponds to the module storing section of the Invention 2, 5, 12, 15, 17, 22, 33, 35, or 40. The storage device 62 corresponds to the device information storing section of the Invention 2, 4, 25, 27, 43 or 45, or to the user ID storing section of the Invention 12, 32, or 50, and step S102 corresponds to the device information receiving section of the Invention 2, 15, or 33.

In the embodiment described above, step S104 corresponds to the function determining section of the Invention 2, 5, 7, 10, 11, 15, 17, 18, 20, 21, 33, 35, 36, 38 or 39, and steps S106 to S110 correspond to the function selecting section of the Invention 5, 7, 17, 18, 35 or 36. Step S202 corresponds to the user ID receiving section of the Invention 12, 22 or 40, and step S208 corresponds to the module reading section of the Inventions 2, 5, 15, 17, 33 or 35, or to the second module reading section of the Invention 12, 22 or 40.

In the embodiment described above, step S210 corresponds to the module sending section of the Invention 2, 15 or 33, or the second module sending section of the Invention 12, 22 or 40, and steps S212, S214, S220 and S222 correspond to the provision limiting section of the Invention 13, 14, 23, 24, 41 or 42. Step S306 corresponds to the device information acquisition section of the Invention 4, 27 or 45; step S310 to the device information sending section of the Invention 2, 4, 25, 27, 43 or 45; and step S408 to the user ID sending section of the Invention 12, 32 or 50.

In the embodiment above, step S410 corresponds to the module receiving section of the Invention 2, 25 or 43, and step S414 to the module executing section of the Invention 2, 25 or 43.

In the embodiment, the device management server 100 corresponds to the devicemanagement terminal of the Inventions 52, 54, 55, 62 to 64; the functionprovisionmodule registration DB 42 to the module storing section of the Invention 52, 55 or 62; and the storage device 62 to the device information storing section of the Invention 52 or the user ID storing section of the Invention 62. Step S102 corresponds to the device information reception step in the Invention 52; step S104 to the function determination step of the Invention 52, 55, 57, 60 or 61; and steps S106 to S110 to the function selection step of the Invention 55 or 57.

In the embodiment, step S202 corresponds to the user ID reception step of the Invention 62; step S208 to the module reading step of the Invention 52 or 55, or to the second module reading step of the Invention 62; and step S210 to the module sending step in Invention 52 or the second module sending step of the Invention 62. Steps S212, S214, S220 and S222 correspond to provision limiting step of the Invention 63 or 64; step S306 to device information acquisition step of the Invention 54; and step S308 to device information reading step of the Invention 52 or 54.

In the above-mentioned embodiment, step S310 corresponds to device information sending step of the Invention 52 or 54; step S406 to user ID reading step of the Invention 62; step S408 to user ID sending step of the Invention 62; and step S410 to module reception step of the Invention 52. Step S414 corresponds to module execution step of the Invention 52.

In the embodiment, the GUI screen corresponds to the selection interface of the Invention 8, 19, 37 or 58; step S104 to function determining section of the Invention 8, 19 or 37, or to function determining step of the Invention 58; and step S106 to selection interface generating section of the Invention 8, 19 or 37, or to selection interface generation step of the Invention 58. Steps S108, S110 correspond to function selecting section of the Invention 8, 19 or 37, or to function selection step of the Invention 58.

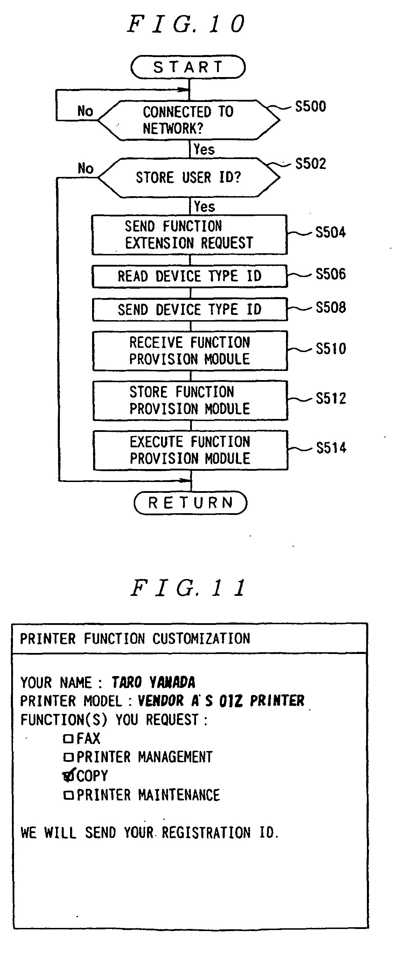

Although the network device 200 is designed to execute module acquisition processing shown in the flowchart in FIG. 8 in the embodiment described above, it may alternatively execute module acquisition processing shown in the flowchart in FIG. 10.

FIG. 10 is a flowchart illustrating the module acquisition processing.

Once initiated by the CPU 50, the module acquisition processing first proceeds to step S500 as shown in the figure.

At step S500, it is determined whether or not the network device 200 is connected to the Internet 199. If it is determined that the device is connected to the Internet 199 (Yes), the process proceeds to step S502, otherwise (No), the process waits at step S500 until the device is connected to the Internet 199.

At step S502, it is determined whether or not a user ID is stored in the storage device 62. If it is determined that a user ID is stored in the storage device 62 (Yes), the process proceeds to step S504 to send a request for function extension to the device management server 100 and proceeds to step S506.

At step S506, device information is read out from the storage device 62, and then at step S508, the device information is sent to the device management server 100. The process then proceeds to step S510.

At step S510, a function provision module is received, and at step S512, the function provision module is stored in the storage device 62. Then, at step S514, the function provision module is executed and the processing is terminated and the system returns to operation it was originally performing.

On the other hand, if it is determined at step 502 that a user ID is not stored in the storage device 62 (No), the processing is terminated and the system returns to operation it was originally performing.

With such a constitution, when the network device 200 is connected to the Internet 199 with a user ID stored in the storage device 62, the network device 200 sends a function extension request to the device management server 100, reads device information from the storage device 62, and sends the device information to the device management server 100, through steps S504 to S508.

On receiving the device information together with the function extension request, the device management server 100 determines functions available to the network device 200 based on the device information, and determines whether or not those functions include a chargeable function, through steps S218 and S220. If it determines that no function to be charged is included, a function provision module that corresponds to the determined function is read out from the function provision module registration DB 42 and the function provision module is sent to the network device 200, through steps S208 and S210.

When it receives the function provision module, the network device 200 stores the module in the storage device 62 and executes the module to realize the function, through steps S512 and S514.

This provides advantages equivalent to the afore-mentioned embodiment.

Although processing at steps S106 to S110 are executed in the device management server 100 in the embodiment, this is not limitation: it may be executed in the network device 200.

That enables a function list to be generated and functions to be selected regardless of the state of the device management server 100 or communication state of a network. For a selected function, a function provision module may be obtained from the device management server 100 when the network device 200 is connected to the network after that function is selected. Also, network traffic and load on the device management server 100 can be reduced since excessive accesses to the device management server 100 can be mitigated.

In that case, the function provision module registration DB 42 corresponds to the module storing section of the Invention 6 or 56; step S104 to the function determining section of the Invention 6 or the function determining step of the Invention 56; and steps S106 to S110 to the function selecting section of the Invention 6, 28 or 46, or to the function selection step of the Invention 56. Step S208 corresponds to the module reading section of the Invention 6 or the module reading step of the Invention 56.

Although processing at step S106 is executed by the device management server 100 in the embodiment, this is not limitation: it may be executed by the network device 200.

In that case, the GUI screen corresponds to the selection interface of the Invention 9, 29, 47 or 59; step S104 to the function determining section of the Invention 9 or the function determining step of the Invention 59; and step S106 to the selection interface generating section of the Invention 9, 29 or 47, or the selection interface generating step of the Invention 59. Steps S108 and S110 correspond to the function selecting section of the Invention 9, 29 or 47, or the function selection step of the Invention 59.

Although functions are managed using device type ID in the embodiment, this is not limitation: functions may be managed using both device type ID and device ID.

The embodiment described above is intended to provide optimal service for each network device 200. Because users may utilize different services on the network devices 200, device type ID is necessary for selection of optimal services. In addition, because some users cannot utilize services that involve users identification or charging, device IDs that identify users are necessary. The device management server 100 identifies a user based on a device ID and determines whether a service can be provided to the user or not. Only device type IDs will do when providing services that impose no limitation on utilization.

In the embodiment above, a function provision module can provide applications optimal for the user's environment by section of combination with other devices: for example, it may be an application that retrieves data from a digital camera and prints the data in a case where a digital camera as the network device 200 is connected to the Internet 199, or may be a function provision module that provides FAX or copy function when a scanner as the network device 200 is connected to the Internet 199.

Although in the embodiment, the device management server 100 generates a GUI screen on which one can select one or more functions from functions selected by the server and presents it to the user for selection of one or more of the functions, this is not limitation: it is alsopossible to prepare a postcard or other forms of mail which allows one to select one or more from selected functions, and read and input his/her selection indicated on the returned mail.

FIG. 11 illustrates a postcard on which one can select available functions.

In this example, available functions "FAX", "printer management", "copy", and "printer maintenance" are printed on the postcard, and the user has selected "copy".

Also, although processing shown in the flowcharts in FIGS. 4 and 5 are realized as functions of the device management server 100 in the embodiment, this is not limitation but it may be realized as functions of any one of multiple network devices 200.

In that case, programs for realizing the processing in the flowcharts in FIGS. 4 and 5 are implemented as function provision modules, and the network device 200 may obtain the modules externally and execute them. This can reduce cost since the device management server 100 need not to be provided, and general network devices 200 can realize those functions without designing special network devices 200. And the above embodiment cited a network scanner and network printer as examples of the network devices 200, this is not limitation but it is also feasible to use a home gateway, network-enabled projector, digital camera, digital video camera, personal computer, PDA (Personal Digital Assistant), network storage, audio equipment, mobile phone, PHS (Personal Handyphone System, a registered trademark), watch-type PDA, POS (Point of Sales) terminal, copier, facsimile machine, telephone (including IP telephone and the like), exchange, NCU (Network Control Unit), and other network-enabled equipment.

Although in the description of the embodiment above, a control program that is stored in the ROM 32 in advance is executed when the processing in the flowcharts in FIG. 4 and 5 is performed, this is not limitation: programs designating those procedures may be read from a storage medium to the RAM 34 and executed.

As well, although in the description of the embodiment above, a control program that is stored in the ROM 32 in advance is executed when the processing in the flowcharts in FIG. 7, 8 and 10 is performed, this is not limitation: programs designating those procedures may be read from a storage medium to the RAM 54 and executed.

The storage medium may be any type of storage medium as long as it can be read by a computer whether electronically, magnetically, or optically, including semiconductor storage media such as RAM and ROM, magnetic storage media such as FD and HD, optical storage media such as CD, CDV, LD, and DVD, magnetic storage/optical reading storage media such as MO.

Although in the embodiment above, the device management system, device management terminal, network device, terminal program, device program, and device management method of the invention are applied to a network system comprising the Internet 199, this is not limitation: they may be applied to an intranet that communicates using the same technique as the Internet 199. Of course, they may be applied to a common network other than those that use the same communication scheme as the Internet 199.

Although in the embodiment above, the device management system, device management terminal, network device, terminal program and device program, and device management method of the invention are applied so as to extend the functions of the network device 200 when the network device 200 is connected to the Internet 199, this is not limitation: theymaybe applied for other purposes without departing from the scope of the invention.

## Claims

1. A device management system which connects a network device with a device management terminal that manages said network device so that they can communicate with each other, wherein
said device management terminal (100) comprises:
a module-storing section (42) or storing a function provision module that is applied to said network device to provide it with functions,
a device-information receiving section (40) for receiving device information regarding said network device,
a function-determining section for determining a function provision module that has a function available to said network device based on said device information received by said device-information receiving section,
a module-reading section for reading said function provision module, which is determined by said function-determining section, from said module-storing section, and
a module-sending section for sending said function provision module, which is read by said module-reading section, to said network device; and
said network device (200) comprises:
a device-information storing section (62) for storing said device information,
a device-information sending section (58) for sending said device information, which is stored by said device-information storing section, to said device management terminal,
a module-receiving section for receiving said function provision module, and
a module-executing section for executing the function provision module received by said module-receiving section;
**characterized in that**:
said network device comprises a function-selecting section that allows a user to select one or more of the functions, which correspond to the function provision module determined by said function-determining section;
said module-reading section is arranged to read out a function provision module, which corresponds to a function selected by said function-selecting section, from said module-storing section;
said network device further comprises a selection-interface generating section for generating a selection interface through which there can be selected one or more of the functions, which correspond to the function provision module determined by said function-determining section, and
said function-selecting section is arranged to present the selection interface, which is generated by said selection-interface generating section, to the user, so that the user can select one or more of the functions.

2. The device management system according to claim 1, wherein
said device information includes device type identification information that identifies the type of said network device, and
said function determining section determines a function provision module that has a function available to said network device based on function registration table that stores functions associated with said device type identification information.

3. The device management system according to claim 2, wherein
said device type identification information is a device type ID that uniquely identifies the type of said network device, and
said function determining section determines a function provision module that has a function available to said network device basd on a fucntion registration table that stores functions associated with said device type IDs.

4. The device management system according to any one of the preceding claims, wherein
said module storing section stores said function provision module as associated with a user ID,
said device management terminal comprises a user ID receiving section for receiving said user ID, a second module reading section for reading a function provision module, which corresponds to a user ID received by said user ID receiving section, from said module storing section, and a second module sending section for sending said function provision module, which is read by said second module reading section, to said network device, and
said network device comprises a user ID storing section for storing a user ID, and a user ID sending section for sending the user ID, which is stored in said user ID storing section, to said device management terminal.

5. The device management system according to claim 4, wherein
said device management terminal comprises a provision-limiting section for limiting provision of a function provision module, and
said provision-limiting section prevents a function-provision module, that has been once provided to said network device based on said user ID, from being provided for a reaccess based on the same user ID.

6. The device management system according to claim 4, wherein
said device management terminal comprises a provision-limiting section for limiting provision of a function provision module, and
said provision-limiting section defines the provision range of a function provision module for each of said user IDs and prevents provision of a function provision module, which has been provided to the network device based on said user ID, beyond the provision range defined for the user ID.

7. The device management system according to any one of the preceding claims, wherein
a plurality of said network devices are connected so that they can communicate with the system, and
said function provision module is a module which realizes a function that is provided by at least two of said network devices working in combination.

8. The device management system according to claim 7, wherein
said network device comprises a device information acquisition section for obtaining device information for another network device, other than itself, from that network device among said plurality of network devices, and
said device information sending section is arranged to send device information, which is stored in said device information storing section, and device information, which is obtained by said device information acquisition section, to said device management terminal.

9. A device management terminal for a device management system, the terminal (100) comprising:
a module-storing section (42) storing a function provision module, which is applied to a network device to provide it with functions,
a device information receiving section (40) for receiving device information regarding said network device,
a function-determining section for determining a function provision module, which has a function available to said network device based on said device information received by said device information receiving section,
a module-reading section for reading the function provision module, which is determined by said function-determining section, from said module-storing section, and
a module-sending section for sending said function provision module, which is read by said module-reading section, to said network device,
wherein said module-reading section is arranged to read out a function provision module, which corresponds to a function selected by a function selecting section in said network device, from said module storing section.

10. A network device for a device management system, the network device comprising:
a device information storing section (62) storing device information regarding a network device,
a device information sending section (58) for sending the device information, which is stored by said device information storing section, to a device management terminal,
a module-receiving section for receiving a function provision module that is applied to the network device to provide it with a function,
a module-executing section for executing the function provision module received by said module-receiving section,
a function-selecting section which allows a user to select one or more of the functions, which correspond to the function provision module determined by the function-determining section in said device management tenninal, and
a selection interface generating section for generating a selection interface, through which there can be selected one or more of the functions, which correspond to the function provision module determined by the function-determining section in said device management terminal,
wherein said function-selecting section is arranged to present the selection interface, which is generated by said selection interface generating section, to the user, so that the user can select one or more of the functions.

## Revendications

1. Système de gestion de périphérique connectant un périphérique de réseau à un terminal de gestion de périphérique qui gère ledit périphérique de réseau de manière à ce qu'ils puissent communiquer l'un avec l'autre,
ledit terminal de gestion de périphérique (100) comprenant :
une section de stockage de module (42) pour stocker un module de fourniture de fonctions utilisé pour ledit périphérique de réseau afin de lui fournir des fonctions,
une section de réception d'informations sur le périphérique (40) pour recevoir des informations sur le périphérique concernant ledit périphérique de réseau,
une section de détermination de fonctions pour déterminer un module de fourniture de fonctions qui possède une fonction disponible pour ledit périphérique de réseau sur la base desdites informations sur le périphérique reçues par ladite section de réception d'informations sur le périphérique,
une section de lecture de module pour lire ledit module de fourniture de fonctions, lequel est déterminé par ladite section de détermination de fonctions, à partir de ladite section de stockage de module, et
une section d'envoi de module pour envoyer ledit module de fourniture de fonctions, lequel est lu par ladite section de lecture de module, audit périphérique de réseau, et
ledit périphérique de réseau (200) comprenant :
une section de mémorisation d'informations sur le périphérique (62) pour mémoriser lesdites informations sur le périphérique,
une section d'envoi d'informations sur le périphérique (58) pour envoyer lesdites informations sur le périphérique, lesquelles sont gardées en mémoire par ladite section de mémorisation d'informations sur le périphérique, audit terminal de gestion de périphérique,
une section de réception de module pour recevoir ledit module de fourniture de fonctions, et
une section d'exécution de module pour exécuter le module de fourniture de fonctions reçu par ladite section de réception de module;
**caractérisé en ce que** :
ledit périphérique de réseau comprend une section de sélection de fonctions permettant à un utilisateur de sélectionner une ou plusieurs fonctions, lesquelles correspondent au module de fourniture de fonctions déterminé par ladite section de détermination de fonctions ;
ladite section de lecture de module étant étudiée pour lire un module de fourniture de fonctions, lequel corresponds à une fonction sélectionnée par ladite section de sélection de fonctions, à partir de ladite section de stockage de module ;
ledit périphérique de réseau comprenant par ailleurs une section de génération d'interface de sélection pour générer une interface de sélection grâce à laquelle on peut sélectionner une ou plusieurs fonctions, lesquelles correspondent au module de fourniture de fonctions déterminé par ladite section de détermination de fonctions, et
ladite section de sélection de fonction étant étudiée pour présenter l'interface de sélection, laquelle est générée par ladite section de génération d'interface de sélection, à l'attention de l'utilisateur, de manière à ce que l'utilisateur puisse sélectionner une ou plusieurs fonctions.

2. Système de gestion de périphérique selon la revendication 1,
lesdites informations sur le périphérique comprenant de l'information d'identification du type de périphérique, laquelle identifie le type dudit périphérique de réseau, et
ladite section de détermination des fonctions déterminant un module de fourniture de fonctions possédant une fonction disponible pour ledit périphérique de réseau sur la base d'un tableau d'enregistrement des fonctions qui répertorie les fonctions associées à ladite information d'identification du type de périphérique.

3. Système de gestion de périphérique selon la revendication 2,
ladite information d'identification du type de périphérique étant un identifiant du type de périphérique identifiant de manière unique le type dudit périphérique de réseau, et
ladite section de détermination des fonctions déterminant un module de fourniture de fonctions possédant une fonction disponible pour ledit périphérique de réseau sur la base d'un tableau d'enregistrement des fonctions qui répertorie les fonctions associées audits identifiants du type de périphérique.

4. Système de gestion de périphérique selon l'une quelconque des revendications précédentes,
ladite section de stockage de module gardant en mémoire ledit module de fourniture de fonctions tel qu'associé à un identifiant utilisateur,
ledit terminal de gestion de périphérique comprenant une section de réception de l'identifiant utilisateur pour recevoir ledit identifiant utilisateur, une deuxième section de lecture de module pour lire un module de fourniture de fonctions, lequel correspond à un identifiant utilisateur reçu par ladite section de réception de l'identifiant utilisateur, à partir de ladite section de stockage de module, et une deuxième section d'envoi de module pour envoyer ledit module de fourniture de fonctions, lequel est lu par ladite deuxième section de lecture de module, audit périphérique de réseau, et
ledit périphérique de réseau comprenant une section de mémorisation de l'identifiant utilisateur pour mémoriser un identifiant utilisateur, et une section d'envoi de l'identifiant utilisateur pour envoyer l'identifiant utilisateur, lequel est gardé en mémoire dans ladite section de mémorisation de l'identifiant utilisateur, audit terminal de gestion de périphérique.

5. Système de gestion de périphérique selon la revendication 4,
ledit terminal de gestion de périphérique comprenant une section de limitation de fourniture pour limiter la fourniture d'un module de fourniture de fonctions, et
ladite section de limitation de fourniture évitant qu'un module de fourniture de fonctions, lequel a été fournit une fois audit périphérique de réseau sur la base dudit identifiant utilisateur, ne soit fournit pour un nouvel accès sur la base du même identifiant utilisateur.

6. Système de gestion de périphérique selon la revendication 4,
ledit terminal de gestion de périphérique comprenant une section de limitation de fourniture pour limiter la fourniture d'un module de fourniture de fonctions, et
ladite section de limitation de la fourniture définissant la plage de fourniture d'un module de fourniture de fonctions pour chacun desdits identifiants utilisateurs, et évitant la fourniture d'un module de fourniture de fonctions, lequel a été fournit au périphérique de réseau sur la base dudit identifiant utilisateur, en-dehors de la plage de fourniture définie pour l'identifiant utilisateur.

7. Système de gestion de périphérique selon l'une quelconque des revendications précédentes,
une pluralité desdits périphériques de réseau étant connectés de manière à pouvoir communiquer avec le système, et
ledit module de fourniture de fonctions étant un module qui réalise une fonction fournie grâce à au moins deux desdits périphériques de réseau travaillant en combinaison.

8. Système de gestion de périphérique selon la revendication 7,
ledit périphérique de réseau comprenant une section d'acquisition d'informations sur le périphérique pour obtenir des informations de périphérique pour un autre périphérique de réseau différent de lui-même, de celui des périphériques de réseau parmi ladite pluralité des périphériques de réseau, et
ladite section d'envoi des informations sur le périphérique étant étudiée pour envoyer des informations sur le périphérique, lesquelles sont gardées en mémoire dans ladite section de mémorisation des informations sur le périphérique, et des informations sur le périphérique obtenues par ladite section d'acquisition des informations sur le périphérique, à l'attention dudit terminal de gestion de périphérique.

9. Terminal de gestion de périphérique pour un système de gestion de périphérique, le terminal (100) comprenant :
une section de stockage de module (42) stockant un module de fourniture de fonctions, lequel est utilisé pour un périphérique de réseau afin de lui fournir des fonctions,
une section de réception d'informations sur le périphérique (40) pour recevoir des informations sur le périphérique concernant ledit périphérique de réseau,
une section de détermination de fonctions pour déterminer un module de fourniture de fonctions, lequel possède une fonction disponible pour ledit périphérique de réseau sur la base desdites informations sur le périphérique reçues par ladite section de réception des informations sur le périphérique,
une section de lecture de module pour lire le module de fourniture de fonctions, lequel est déterminé grâce à ladite section de détermination de fonctions, à partir de ladite section de stockage de module, et
une section d'envoi de module pour envoyer ledit module de fourniture de fonctions, lequel est lu par ladite section de lecture de module, audit périphérique de réseau,
ladite section de lecture de module étant étudiée pour lire un module de fourniture de fonctions, lequel correspond à une fonction sélectionnée par une section de sélection de fonction dans ledit périphérique de réseau, à partir de ladite section de stockage de module.

10. Périphérique de réseau pour un système de gestion de périphérique, le périphérique de réseau comprenant :
une section de mémorisation d'informations sur le périphérique (62) gardant en mémoire des informations concernant un périphérique de réseau,
une section d'envoi d'informations sur le périphérique (58) pour envoyer les informations sur le périphérique, lesquelles sont gardées en mémoire par ladite section de mémorisation d'informations sur le périphérique, audit terminal de gestion de périphérique,
une section de réception de module pour recevoir un module de fourniture de fonctions qui est utilisé pour le périphérique de réseau afin de lui fournir une fonction,
une section d'exécution de module pour exécuter le module de fourniture de fonctions reçu par ladite section de réception de module;
une section de sélection de fonctions permettant à un utilisateur de sélectionner une ou plusieurs fonctions, lesquelles correspondent au module de fourniture de fonctions déterminé par la section de détermination de fonctions dans ledit terminal de gestion de périphérique, et
une section de génération d'interface de sélection pour générer une interface de sélection, grâce à laquelle on peut sélectionner une ou plusieurs fonctions, lesquelles correspondent au module de fourniture de fonctions déterminé par la section de détermination de fonctions dudit terminal de gestion de périphérique,
ladite section de sélection de fonctions étant étudiée pour présenter l'interface de sélection, laquelle est générée par ladite section de génération d'interface de sélection, à l'attention de l'utilisateur, de manière à ce que l'utilisateur puisse sélectionner une ou plusieurs des fonctions.

## Patentansprüche

1. Managementsystem für ein Gerät, das ein Netzwerkgerät mit einem Managementterminal für ein Gerät verbindet, das das Netzwerkgerät derart managt, dass sie miteinander kommunizieren können, wobei
das Managementterminal für ein Gerät (100) umfasst:
einen Modul-Speicherabschnitt (42) zum Speichern eines Funktionsbereitstellungsmoduls, das bei dem Netzwerkgerät angewendet wird, um diesem Funktionen zu verleihen,
einen Geräteinformationen-Empfangsabschnitt (40) zum Empfangen von Geräteinformationen in Bezug auf das Netzwerkgerät,
einen Funktions-Bestimmungsabschnitt zum Bestimmen eines Funktionsbereitstellungsmoduls, das eine Funktion hat, die dem Netzwerkgerät zur Verfügung steht, auf der Basis der Geräteinformationen, die von dem Geräteinformationen-Empfangsabschnitt empfangen werden,
einen Modul-Leseabschnitt zum Lesen des Funktionsbereitstellungsmoduls, das durch den Funktions-Bestimmungsabschnitt bestimmt wird, aus dem Modul-Speicherabschnitt; und
einen Modul-Sendeabschnitt zum Senden des Funktionsbereitstellungsmoduls, das von dem Modul-Leseabschnitt gelesen wird, zu dem Netzwerkgerät; und
das Netzwerkgerät (200) umfasst:
einen Geräteinformationen-Speicherabschnitt (62) zum Speichern der Geräteinformationen,
einen Geräteinformationen-Sendeabschnitt (58) zum Senden der Geräteinformationen, die von dem Geräteinformationen-Speicherabschnitt gespeichert werden, zu dem Managementterminal für ein Gerät,
einen Modul-Empfangsabschnitt zum Empfangen des Funktionsbereitstellungsmoduls, und
einen Modul-Ausführungsabschnitt zum Ausführen des Funktionsbereitstellungsmoduls, das von dem Modul-Empfangsabschnitt empfangen wird;
**dadurch gekennzeichnet, dass**:
das Netzwerkgerät einen Funktions-Wählabschnitt umfasst, der einem Benutzer ermöglicht, eine oder mehrere der Funktionen zu wählen, die dem Funktionsbereitstellungsmodul entsprechen, das von dem Funktions-Bestimmungsabschnitt bestimmt wird;
der Modul-Leseabschnitt zum Lesen eines Funktionsbereitstellungsmoduls, das einer Funktion entspricht, die von dem Funktions-Wählabschnitt gewählt wurde, aus dem Modul-Speicherabschnitt ausgebildet ist;
das Netzwerkgerät des Weiteren einen Wählschnittstellen-Erzeugungsabschnitt zum Erzeugen einer Wählschnittstelle umfasst, durch die eine oder mehrere der Funktionen gewählt werden können, die dem Funktionsbereitstellungsmodul entsprechen, das von dem Funktions-Bestimmungsabschnitt bestimmt wird, und
der Funktions-Wählabschnitt so ausgebildet ist, dass er die Wählschnittstelle, die von dem Wählschnittstellen-Erzeugungsabschnitt erzeugt wird, dem Benutzer präsentiert, so dass der Benutzer eine oder mehrere Funktionen wählen kann.

2. Managementsystem für ein Gerät nach Anspruch 1, wobei
die Geräteinformationen Informationen zur Identifizierung des Gerätetyps enthalten, die den Typ des Netzwerkgeräts identifizieren, und
der Funktions-Bestimmungsabschnitt ein Funktionsbereitstellungsmodul, das eine Funktion hat, die dem Netzwerkgerät zur Verfügung steht, auf der Basis einer Funktions-Registrierungstabelle bestimmt, die Funktionen speichert, die den Informationen zur Identifizierung des Gerätetyps zugeordnet sind.

3. Managementsystem für ein Gerät nach Anspruch 2, wobei
die Informationen zur Identifizierung des Gerätetyps eine Gerätetyp-ID sind, die den Typ des Netzwerkgeräts eindeutig identifiziert, und
der Funktions-Bestimmungsabschnitt ein Funktionsbereitstellungsmodul, das eine Funktion hat, die dem Netzwerkgerät zur Verfügung steht, auf der Basis einer Funktions-Registrierungstabelle bestimmt, die Funktionen speichert, die den Gerätetyp-IDs zugeordnet sind.

4. Managementsystem für ein Gerät nach einem der vorangehenden Ansprüche, wobei
der Modul-Speicherabschnitt das Funktionsbereitstellungsmodul speichert, das einer Benutzer-ID zugeordnet ist,
das Managementterminal für ein Gerät einen Benutzer-ID-Empfangsabschnitt zum Empfangen der Benutzer-ID, einen zweiten Modul-Leseabschnitt zum Lesen eines Funktionsbereitstellungsmoduls, das einer Benutzer-ID entspricht, die von dem Benutzer-ID-Empfangsabschnitt empfangen wird, von dem Modul-Speicherabschnitt, und einen zweiten Modul-Sendeabschnitt zum Senden des Funktionsbereitstellungsmoduls, das von dem zweiten Modul-Leseabschnitt gelesen wird, zu der Netzwerkgerät umfasst, und
das Netzwerkgerät einen Benutzer-ID-Speicherabschnitt zum Speichern einer Benutzer-ID, und einen Benutzer-ID-Sendeabschnitt zum Senden der Benutzer-ID, die in dem Benutzer-ID-Speicherabschnitt gespeichert ist, zu dem Managementterminal für ein Gerät umfasst.

5. Managementsystem für ein Gerät nach Anspruch 4, wobei
das Managementterminal für ein Gerät einen Bereitstellungs-Begrenzungsabschnitt zum Begrenzen der Bereitstellung eines Funktionsbereitstellungsmoduls umfasst, und
der Bereitstellungs-Begrenzungsabschnitt verhindert, dass ein Funktionsbereitstellungsmodul, das dem Netzwerkgerät auf der Basis der Benutzer-ID einmal bereitgestellt wurde, für einen erneuten Zugriff auf der Basis derselben Benutzer-ID bereitgestellt wird.

6. Managementsystem für ein Gerät nach Anspruch 4, wobei
das Managementterminal für ein Gerät einen Bereitstellungs-Begrenzungsabschnitt zum Begrenzen der Bereitstellung eines Funktionsbereitstellungsmoduls umfasst, und
der Bereitstellungs-Begrenzungsabschnitt den Bereitstellungsbereich eines Funktionsbereitstellungsmoduls für jede der Benutzer-IDs definiert und verhindert, dass ein Funktionsbereitstellungsmodul, das dem Netzwerkgerät auf der Basis der Benutzer-ID bereitgestellt wurde, über den Bereitstellungsbereich hinaus, der für die Benutzer-ID definiert ist, bereitgestellt wird.

7. Managementsystem für ein Gerät nach einem der vorangehenden Ansprüche, wobei
eine Mehrzahl von Netzwerkgeräten so angeschlossen sind, dass sie mit dem System kommunizieren können, und
das Funktions-Bereitstellungsmodul ein Modul ist, das eine Funktion realisiert, die von mindestens zwei der Netzwerkgeräte bereitgestellt wird, die in Kombination arbeiten.

8. Managementsystem für ein Gerät nach Anspruch 7, wobei
das Netzwerkgerät einen Geräteinformationen-Erfassungsabschnitt zum Erhalten von Geräteinformationen über ein anderes Netzwerkgerät, nicht das eigene, von diesem Netzwerkgerät aus der Mehrzahl von Netzwerkgeräten umfasst, und
der Geräteinformationen-Sendeabschnitt so ausgebildet ist, dass er Geräteinformationen, die in dem Geräteinformationen-Speicherabschnitt gespeichert sind, und Geräteinformationen, die von dem Geräteinformationen-Erfassungsabschnitt erhalten werden, zu dem Managementterminal für ein Gerät sendet.

9. Managementterminal für ein Gerät für ein Managementsystem für ein Gerät, wobei das Terminal (100) umfasst:
einen Modul-Speicherabschnitt (42) zum Speichern eines Funktionsbereitstellungsmoduls, das bei einem Netzwerkgerät angewendet wird, um diesem Funktionen zu verleihen;
einen Geräteinformationen-Empfangsabschnitt (40) zum Empfangen von Geräteinformationen in Bezug auf das Netzwerkgerät;
einen Funktions-Bestimmungsabschnitt zum Bestimmen eines Funktionsbereitstellungsmoduls, das eine Funktion hat, die dem Netzwerkgerät zur Verfügung steht, auf der Basis der Geräteinformationen, die von dem Geräteinformationen-Empfangsabschnitt empfangen werden,
einen Modul-Leseabschnitt zum Lesen des Funktionsbereitstellungsmoduls, das durch den Funktions-Bestimmungsabschnitt bestimmt wird, aus dem Modul-Speicherabschnitt, und
einen Modul-Sendeabschnitt zum Senden des Funktionsbereitstellungsmoduls, das von dem Modul-Leseabschnitt gelesen wird, zu dem Netzwerkgerät,
wobei der Modul-Leseabschnitt zum Lesen eines Funktionsbereitstellungsmoduls, das einer Funktion entspricht, die von einem Funktions-Wählabschnitt in dem Netzwerkgerät gewählt wird, aus dem Modul-Speicherabschnitt ausgebildet ist.

10. Netzwerkgerät für ein Managementsystem für ein Gerät, wobei das Netzwerkgerät umfasst:
einen Geräteinformationen-Speicherabschnitt (62) zum Speichern von Geräteinformationen in Bezug auf das Netzwerkgerät,
einen Geräteinformationen-Sendeabschnitt (58) zum Senden der Geräteinformationen, die von dem Geräteinformationen-Speicherabschnitt gespeichert sind, zu einem Managementterminal für ein Gerät,
einen Modul-Empfangsabschnitt zum Empfangen eines Funktionsbereitstellungsmoduls, das bei dem Netzwerkgerät angewendet wird, um diesem eine Funktion zu verleihen,
einen Modul-Ausführungsabschnitt zum Ausführen des Funktionsbereitstellungsmoduls, das von dem Modul-Empfangsabschnitt empfangen wird,
einen Funktions-Wählabschnitt, der einem Benutzer ermöglicht, eine oder mehrere der Funktionen zu wählen, die dem Funktionsbereitstellungsmodul entsprechen, das von dem Funktions-Bestimmungsabschnitt in dem Managementterminal für ein Gerät bestimmt wird;
einen Wählschnittstellen-Erzeugungsabschnitt zum Erzeugen einer Wählschnittstelle, durch die eine oder mehrere der Funktionen gewählt werden können, die dem Funktionsbereitstellungsmodul entsprechen, das von dem Funktions-Bestimmungsabschnitt in dem Managementterminal für ein Gerät bestimmt wird,
wobei der Funktions-Wählabschnitt so ausgebildet ist, dass er die Wählschnittstelle, die von dem Wählschnittstellen-Erzeugungsabschnitt erzeugt wird, dem Benutzer präsentiert, so dass der Benutzer eine oder mehrere der Funktionen wählen kann.
